# EUROPEAN PATENT SPECIFICATION

(11) **EP 0 572 063 B1**
(45) Date of publication and mention of the grant of the patent: **18.09.1996**
(21) Application number: 93201384.0
(22) Date of filing: 14.05.1993
(51) Int. Cl.: B01D 46/24, F23J 15/00

(54) **Filtration module**
Filtrationsmodul
Module de filtration

(30) Priority: 18.05.1992 EP 92201425
(43) Date of publication of application: 01.12.1993
(73) Proprietor: SHELL INTERNATIONALE RESEARCH MAATSCHAPPIJ B.V., NL-2596 HR Den Haag (NL)
(72) Inventor: Unger, Phillip Edward, NL-2596 HR The Hague (NL); Dirkse, Hendrik Arien, NL-2596 HR The Hague (NL); Tijm, Petrus Jacobus Adrianus, NL-2596 HR The Hague (NL)

(56) References cited:
- EP-A- 0 078 661
- EP-A- 0 129 053
- EP-A- 0 482 396
- GB-A- 2 155 354

## Description

The invention relates to an apparatus including a number of separate vertically tiered filter assemblies for filtering out particulate material of a predetermined minimum size from a carrier fluid produced by e.g. (partial) combustion processes.

In particular, the invention relates to a high pressure high temperature filter unit design such as applied in coal gasification where entrained solids such as ash are removed from produced synthesis gas via filtration with ceramic candles at temperatures of about 100-800 °C and such as applied in oil gasification for removal of dry soot via filtration with ceramic candles at pressures till about 60 bar.

EP-A-0,129,053 discloses a method of separating particulate material from flue gases produced by combustion and other such processes utilizing porous filter elements which may comprise a multiplicity of filter tubes supported in parallel relationship to one another by a common support plate or tube sheet as it is often called. Flue gases are generally quite hot, for example 150 °C, and are typically at atmospheric pressure. Under these conditions, the filter tubes are typically made of polyester, acrylic or glass. For pressurized fluid bed combustion the resultant gases can be as high as 900 °C at gas pressures from 5 to 15 times atmospheric pressure, in which case the filter tubes are constructed of porous ceramic or rigid sintered porous stainless steel. The particles to be captured by the different tubes vary in size from 0.2 micrometers to 20 micrometers and can weigh in total up to 10 parts per thousand of the weight of gas or more. When the deposit of dust on a filter element increases to 2 or 3 mm, the pressure drop steadily rises and the elements must be cleaned by shaking the tubes, by reversing gas flow or by means of applying high pressure gas pulses through the filter tubes.

This known apparatus for filtering out particulate material of a predetermined minimum size from flue gases produced by combustion or other such processes in a relatively hot and even pressurized environment comprises a main containment vessel defining an interior compartment having inlet means through which the particulate laden flue gases (or other such carrier fluid being filtered) can pass in order to enter the compartment. The vessel also includes separate outlet means through which the carrier fluid, once filtered, can pass in order to leave the compartment. A plurality of filter assemblies are disposed within the vessel compartment and are supported in spaced apart relationship with one another and with the containment vessel itself by means of a single support tube also disposed within the vessel compartment. This tube which preferably extends in a vertical direction serves as a sole means for supporting the filter assemblies, and, at the same time, cooperates with these assemblies and the vessel's outlet means in order to serve as a discharge pipe for directing the filtered fluid out of the vessel through its outlet means.

A general difficulty in the design of any industrial filter assembly comprising a multiplicity of small individual filter tubes of the type recited above is to properly and conveniently assemble such elements in a single vessel. Such a vessel may be required to contain many hundreds of tubes and the particulate laden fluid (which may be a gas or a liquid) must enter the vessel in such a way as to be well distributed around the individual filter tubes. Moreover, each filter tube must be cleaned in any one of the ways mentioned above or in any other suitable way and the particulate material cleaned from these tubes must be collected and eventually removed from the vessel. The filtered fluid must then be ducted from the vessel at a convenient location.

All of these requirements impose many mechanical, thermal and aerodynamic constraints in the design and construction of the overall filtering apparatus.

Heretofore, a typical apparatus utilizing filtering tubes included a main vessel containing a single plate or tube sheet for supporting the filter tubes in a vertically depending manner. This particular type of apparatus has a number of drawbacks. In the first place, the only way that its filter area can be enlarged is by extending its tube sheet diameter in order to support more filter tubes. This quickly leads to a practical mechanical limit.

Because the tube sheet is generally supported only at its circumferential edge, it tends to sag at its center as a result of increasing weight, or it must be made sufficiently thick to prevent sagging which eventually becomes economically prohibitive. Even advanced alloy tube sheets do not overcome this problem at high temperatures. To solve this problem by providing center supports is also impractical because of problems associated with the differential expansion and contraction due to the relatively high temperatures. Even if this problem could be solved, assuming it would be economically justifiable to do so, there are other drawbacks associated with increasing the size of the tube sheet to accommodate a larger number of filter tubes. For example, as the tube sheet increases in size, the overall apparatus becomes squat in shape and eventually unsuitable for barge, rail or road transportation. Also, as the tube sheet increases in size, the containment vessel itself must be enlarged not only in diameter but also in thickness in order to contain and support the tube sheet and internal pressure. Obviously, providing a sufficiently large vessel can be quite expensive and, again, economically prohibitive.

While it may be possible to increase filtering capacity of an apparatus of the type just described by increasing the lengths of its filtering tubes, this is, of course, selflimiting also. Moreover, some rather attractive new advanced ceramic filter tubes have become available but cannot be made any longer than about 1.5 meters.

Thus, in order to expand the filtering capacity of the apparatus of the type described above, utilizing these particular filter tubes would require extending the tube sheet diameter and therefore result in the problems just discussed.

However, the known devices still have technical scaling-up problems and problem areas with respect to large scale configuration.

Further, there is a risk of solids re-entrainment which reduces the effectiveness of the apparatus.

The present invention solves these problems and provides a solids discharge from tiered layers which avoids re-entrainment of solids in fluid flow in lower layers.

The invention therefore provides a filter apparatus for removing particulate solids from particulate-carrying fluid comprising:
(a) an elongated vessel having a plurality of particulate-carrying fluid inlet means and a plurality of separate fluid outlet means, through which particulate-carrying fluid enters the vessel and filtered fluid leaves the vessel;
(b) particulate outlet means through which particulate solids leave the vessel;
(c) a plurality of vertically spaced filter assemblies comprising tube sheets supporting a plurality of filter elements, the tube sheets being attached to the inner wall so that compartments are formed; and wherein the vessel further comprises a tiered conical particulate sluicing system to centralize and concentrate the particulates leaving the vessel, said tiered conical particulate sluicing system being arranged within the vessel in such a manner that the sluicing cones of the sluicing system are in mutual connection by the tiered conical sluicing system and sluicing occurs below each tube sheet by way of a sluicing cone in the compartment adjacent to the tube sheet.

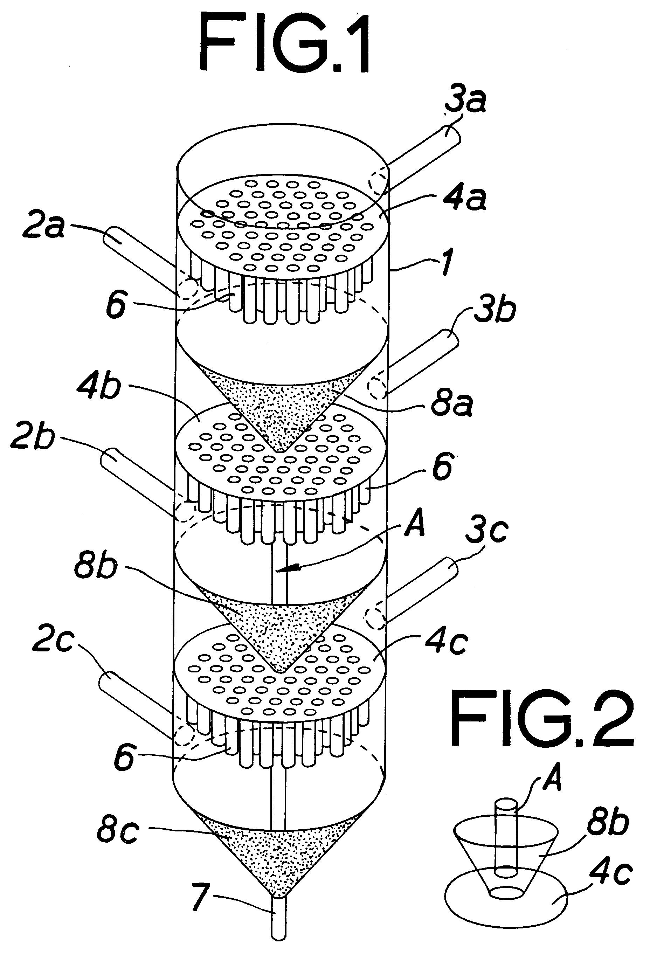

The invention will now be described by way of example in more detail by reference to the accompanying drawing in which: fig. 1 represents a conceptual design for a 3-tiered filtration module of the invention; and fig. 2 represents a detail of fig. 1.

Referring now to fig. 1 an elongated vessel 1 comprising a plurality of "dirty" gas inlets (2a, 2b, 2c) through which the solids laden fluid passes and "clean" gas outlets (3a, 3b, 3c) through which the filtered fluids can pass, has been shown.

The vessel 1 contains, in any way suitable for the purpose, a plurality of tubesheets (4a, 4b, 4c) each supporting, in any way suitable for the purpose, a plurality of filter tubes 6. In this manner a compartmented vessel is formed.

Advantageously, ceramic filter candles are applied as filter tubes 6. In another advantageous embodiment of the invention sintered metal candles are applied as filter candles.

The vessel 1 is provided at its bottom with a solids discharge 7 connected to any suitable means for further processing of the solids (not shown for reasons of clarity).

Further, the vessel 1 comprises a tiered conical solids sluicing system to concentrate and actualize solids sluicing.

This system comprises a plurality of sluicing cones (8a, 8b) attached to a tubesheet (4b, 4c) and the wall of the vessel 1 and each mechanically connected by a substantially vertical sluicing duct A discharging into the cone below.

The lowest cone (8c) is connected to the solids discharge 7.

Fig. 2 shows in more detail the arrangement of tubesheet 4c, connecting duct A from next higher tier and sluicing cone 8b.

In fig. 1 only 3 tubesheets, 3 sluicing cones, 3 gas inlets and 3 gas outlets have been shown for reasons of clarity. However, it will be appreciated that any number of tubesheets, sluicing cones, gas inlets and gas outlets, suitable for the purpose can be applied.

Further, any suitable number, shape and material of the filters can be used.

The invention will be illustrated by way of example only by reference to the following design:

| Design Basis | |
|---|---|
| Filter Media | ceramic candles |
| Filter Dimensions | 6 cm outer diameter x 1.5 meters length |
| Maximum Packing Density | 1 candle per 0.125 m² tubesheet area |
| Clean Plenum Height | 0.5 meters |
| Sluicing Cone Angle | 15 degrees (half angle, 30 degrees full angle) |

| Double Tier | |
|---|---|
| Number Elements | 912 |
| Tubesheet outer diameter | 2.9 meters |
| Total vessel height | 16.9 meters |

| Triple Tier | |
|---|---|
| Number Elements | 912 |
| Tubesheet outer diameter | 2.4 meters |
| Total vessel height | 22.3 meters |

| Vessel Wall Thickness | |
|---|---|
| Pressure | 26 bar |
| Temperature | about 120 °C |
| Vessel Material | carbon steel |

| Double Tier | |
|---|---|
| Vessel wall thickness | 100 mm |
| Vessel Weight | 131 tons |

| Triple Tier | |
|---|---|
| Vessel wall thickness | 83 mm |
| Vessel Weight | 116 tons |

## Claims

1. A filter apparatus for removing particulate solids from particulate-carrying fluid comprising:
(a) an elongated vessel (1) having a plurality of particulate-carrying fluid inlet means (2a, 2b, 2c) and a plurality of separate fluid outlet means (3a, 3b, 3c), through which respectively particulate-carrying fluid can enter the vessel and filtered fluid can leave the vessel;
(b) particulate outlet means (7) through which particulate solids can leave the vessel;
(c) a plurality of vertically spaced filter assemblies comprising tube sheets (4a, 4b, 4c) supporting a plurality of filter elements (6), the tube sheets being attached to the inner wall so that compartments are formed within the vessel; and wherein the vessel further comprises a tiered conical particulate sluicing system to centralize and concentrate the particulates leaving the vessel, said tiered conical particulate sluicing system being arranged within the vessel in such a manner that the sluicing cones (8a, 8b, 8c) of the sluicing system are in mutual connection by the said tiered conical sluicing system and sluicing occurs below each tube sheet by way of a sluicing cone in the compartment adjacent to the tube sheet.

2. The apparatus of claim 1, wherein the tiered conical particulate sluicing system comprises a plurality of sluicing cones (8a, 8b) and a plurality of sluicing ducts (A), each duct being connected to the next higher cone and each duct except the lowest (8c) discharging into the cone below, each sluicing cone being connected to the internal wall of the vessel and each sluicing cone except the lowest (8c) being connected to the tube sheet below.

3. The apparatus as claimed in claims 1 or 2, wherein the filter assemblies comprise filter candles.

4. The apparatus as claimed in claim 3, wherein the filter candles are ceramic candles.

5. The apparatus as claimed in claim 3, wherein the filter candles are sintered metal candles.

6. The apparatus as claimed in any one of claims 1-5, comprising 3 tubesheets comprising filter assemblies, and 3 sluicing cones.

## Patentansprüche

1. Filtriervorrichtung zur Entfernung von teilchenförmigen Feststoffen aus einem teilchenführenden Fluid, bestehend aus:
(a) einem länglichen Gefäß (1) mit mehreren Mitteln (2a, 2b, 2c) zum Einleiten von teilchenführendem Fluid und mehreren separaten Mitteln (3a, 3b, 3c) zum Ableiten von Fluid, durch die teilchenführendes Fluid in das Gefäß eintreten bzw. filtriertes Fluid aus dem Gefäß austreten kann;
(b) Teilchenaustragsmitteln (7), durch die teilchenförmige Feststoffe aus dem Gefäß austreten können;
(c) mehreren vertikal beabstandeten Filtereinheiten, enthaltend mehrere Filterelemente (6) tragende Rohrböden (4a, 4b, 4c), welche so an der Innenwand angebracht sind, daß das Gefäß in Kammern aufgeteilt wird; und wobei das Gefäß zusätzlich noch zum Zentralisieren und Konzentrieren der aus dem Gefäß austretenden Teilchen ein mehrstöckiges trichterförmiges Teilchenausschleusesystem enthält, das so in dem Gefäß angeordnet ist, daß die Ausschleusetrichter (8a, 8b, 8c) des Ausschleusesystems über das mehrstöckige trichterförmige Ausschleusesystem miteinander verbunden sind und das Ausschleusen unterhalb eines jeden Rohrbodens mittels eines Ausschleusetrichters in der dem Rohrboden benachbarten Kammer erfolgt.

2. Vorrichtung nach Anspruch 1, wobei das mehrstöckige trichterförmige Teilchenausschleusesystem aus mehreren Ausschleusetrichtern (8a, 8b) und mehreren Ausschleuserohren (A) besteht, wobei jedes Rohr mit dem nächsthöheren Trichter verbunden ist und jedes Rohr außer dem untersten (8c) in den darunterliegenden Trichter führt, jeder Ausschleusetrichter mit der Innenwand des Gefäßes verbunden ist und jeder Ausschleusetrichter außer dem untersten (8c) mit dem darunterliegenden Rohrboden verbunden ist.

3. Vorrichtung nach Anspruch 1 oder 2, wobei die Filtereinheiten Filterkerzen enthalten.

4. Vorrichtung nach Anspruch 3, wobei es sich bei den Filterkerzen um keramische Kerzen handelt.

5. Vorrichtung nach Anspruch 3, wobei es sich bei den Filterkerzen um Kerzen aus gesintertem Metall handelt.

6. Vorrichtung nach einem der Ansprüche 1-5, bestehend aus 3 Filtereinheiten enthaltenden Rohrböden und 3 Ausschleusetrichtern.

## Revendications

1. Appareil de filtration pour extraire des particules solides d'un fluide porteur de particules, comprenant:
(a) un récipient allongé (1) présentant plusieurs moyens d'entrée (2a, 2b, 2c) de fluide porteur de particules et plusieurs moyens de sortie (3a, 3b, 3c) séparés de fluide, par l'intermédiaire desquels du fluide porteur de particules peut entrer dans le récipient et du fluide filtré peut quitter le récipient, respectivement;
(b) un moyen de sortie des particules (7), par l' intermédiaire duquel des particules solides peuvent quitter le récipient;
(c) plusieurs ensembles de filtre espacés verticalement, comprenant des tôles à tubes (4a, 4b, 4c) soutenant plusieurs éléments de filtration (6), les tôles à tubes étant attachées à la paroi interne de telle sorte que des compartiments sont formés dans le récipient; et dans lequel le récipient comprend en outre un système étagé de cônes de décharge des particules, pour centraliser et concentrer les particules qui quittent le récipient, ledit système étagé de cônes de décharge des particules étant agencé dans le récipient de telle manière que les cônes de décharge (8a, 8b, 8c) du système de décharge soient raccordés l'un à l'autre par ledit système étagé de cônes de décharge, et qu'une décharge se produise en dessous de chaque tôle à tubes, par l'intermédiaire d'un cône de décharge du compartiment adjacent à la tôle à tubes.

2. Appareil selon la revendication 1, dans lequel le système étagé de cônes de décharge de particules comprend plusieurs cônes de décharge (8a, 8b) et plusieurs conduits (A) de décharge, chaque conduit étant raccordé au cône supérieur adjacent et chaque conduit, à l'exception du conduit inférieur (8c), se déchargeant dans le cône inférieur, chaque cône de décharge étant raccordé à la paroi interne du récipient et chaque cône de décharge, à l'exception du cône inférieur (8c), étant raccordé à la tôle à tubes inférieure.

3. Appareil selon la revendication 1 ou 2, dans lequel l'ensemble de filtre comprend des bougies filtrantes.

4. Appareil selon la revendication 3, dans lequel les bougies filtrantes sont des bougies en céramique.

5. Appareil selon la revendication 3, dans lequel les bougies filtrantes sont des bougies en métal fritté.

6. Appareil selon l'une quelconque des revendications 1-5, comprenant 3 tôles à tubes comprenant des ensembles de filtre et 3 cônes de décharge.
